# EUROPEAN PATENT APPLICATION

(11) **EP 4 439 828 A1**
(43) Date of publication of application: **02.10.2024**
(21) Application number: 24165199.1
(22) Date of filing: 21.03.2024
(51) Int. Cl.: H01M 50/213, H01M 50/507, H01M 50/516, H01M 50/517

(54) **CELL HOLDER FOR A BATTERY PACK AND BATTERY PACK INCLUDING THE SAME**

(30) Priority: 26.03.2023 KR 20230039401; 06.10.2023 KR 20230133687
(71) Applicant: Samsung SDI Co., Ltd., Yongin-si, Gyeonggi-do 17084 (KR)
(72) Inventor: Kwag, Nohyun, 17084 Yongin-si, Gyeonggi-do (KR); Park, Daeyeop, 17084 Yongin-si, Gyeonggi-do (KR)
(74) Representative: Gulde & Partner

(57) **Abstract**

The present invention relates to a cell holder for a battery pack and a battery pack including the same. The cell holder for a battery pack includes:
a rib providing an assembling location for a plurality of battery cells;
a second location regulating portion covering a portion of a second bus bar being assembled at a side portion of the cell holder and fixing a location of the second bus bar.

## Description

### BACKGROUND

### 1. Field

The present disclosure relates to a cell holder for a battery pack and a battery pack including the same.

### 2. Description of the Related Art

A secondary battery can be recharged and discharged, unlike a primary battery that is not rechargeable. A low-capacity secondary battery may be used for a small and portable electronic device, such as a smartphone, a feature phone, a laptop computer, a digital camera, and a camcorder, and a high-capacity secondary battery may be widely used as a motor-driving power supply, a powerstorage battery, etc. of a hybrid vehicle, an electric vehicle, etc. The secondary battery may include an electrode assembly including a positive electrode and a negative electrode, a case accommodating the electrode assembly, an electrode terminal connected to the electrode assembly, etc.

The information described as the background of the present disclosure is merely for helping the understanding of the background of the present disclosure and may therefore contain information that does not constitute related art.

Generally, a battery pack may be used as an energy storage system (ESS) or a device for storing energy of an electric vehicle (EV). Examples of the EV may include a hybrid vehicle (HEV), a plug-in hybrid vehicle (PHEV), a battery electric vehicle (BEV), etc.

A battery pack may include a cylindrical cell, a prismatic cell, and/or a pouch cell. A battery pack includes a plurality of battery cells. The plurality of battery cells may be electrically connected to each other in series or parallel. Each battery cell includes a positive and negative electrode. A current collector referred to as a bus bar may be provided to electrically connect the plurality of battery cells to each other. The bus bar is electrically connected to each of the battery cells. Ultrasonic wire bonding (WB) may be used to electrically connect the bus bar to the battery cells. Ultrasonic WB is a method in which a battery cell is electrically connected to a bus bar by using a fused metal such as aluminum based on a slip critical connection principle. Fixing the relative movement between the bus bar and the battery cell is important to achieve a good quality of the ultrasonic WB. If one of the parts (the bus bar or the battery cell) moves during the ultrasonic WB process, bonding defects may occur. In a battery pack according to the related art, a bus bar may be fixed to a cell holder by bonding to the cell holder via a double-sided tape or an adhesive. However, using double-sided tape to bond the bus bar to the cell holder may create an undesirable gap may between the bus bar and the cell holder, and may also results in a high processing cost. Using adhesive may have a high equipment investment cost and decreased productivity due to a curing time, etc.

### SUMMARY

The invention is defined by the appended claims. The description that follows is subjected to this limitation. Any disclosure lying outside the scope of said claims is only intended for illustrative as well as comparative purposes.

According to one or more embodiments, a coupling structure of a bus bar and a cell holder may be configured to improve the quality of electrical connection between the bus bar and a battery cell which are included in a battery pack and to thereby increase the productivity of the process of manufacturing the battery pack.

According to a first aspect of the present invention, there is provided a cell holder for a battery pack including:
a rib providing an assembling location for a plurality of battery cells;
a second location regulating portion covering a portion of a second bus bar being assembled at a side portion of the cell holder and fixing a location of the second bus bar.

The cell holder may further include an upper surface at which the first bus bar and the first location regulating portion are located and a side surface at which the second bus bar and the second location regulating portion are located.

The cell holder may further include a dam portion providing an accommodation space for a potting resin in the cell holder. The dam portion may include a protruding wall body upwardly protruding from an upper surface of the cell holder and substantially entirely surrounding the upper surface of the cell holder.

At least one of the first bus bar and/or the second bus bar may be coupled to the cell holder by insert injection molding.

The cell holder may further include a space portion in an upper surface of the cell holder, the space portion being configured to reduce a contraction stress during the insert injection molding.

The first bus bar and the second bus bar may extend in parallel with each other and are electrically connected to each other through a connection piece.

The cell holder further may include a jig hole at a location at which the cell holder overlaps at least one of the first bus bar or the second bus bar, the jig hole being configured to fix a location of the at least one of the first bus bar or the second bus bar.

The cell holder further may include a terminal hole exposing a terminal of a battery cell of the plurality of battery cells, wherein the jig hole is around the terminal hole.

According to a second aspect of the present invention, there is provided battery pack including the above-mentioned cell holder; and a plurality of battery cells being assembled and fixed in the cell holder, wherein each battery cell is electrically coupled to the at least one first bus bar or second bus bar.

Additional aspects will be set forth in part in the description which follows and, in part, will be apparent from the description, or may be learned by practice of the presented embodiments of the present disclosure.

According to one or more embodiments, a battery pack includes a number of battery cells each including an electrode at an end in a lengthwise direction of the battery cells, a first bus bar located at the end of the battery cells in the lengthwise direction and facing the electrodes of the battery cells,
a second bus bar located at the end of the battery cells in the lengthwise direction of the battery cells, and
a cell holder including a rib providing an assembling location of the battery cells, a first location regulating portion covering a portion of the first bus bar to fix a location of the first bus bar, a second location regulating portion covering a portion of the second bus bar to fix a location of the second bus bar, and a dam portion for providing an accommodation space of a potting resin placed in the cell holder to bury at least a portion of the first bus bar.

The cell holder may further include an upper surface at which the first bus bar and the first location regulating portion are located and a side surface at which the second bus bar and the second location regulating portion are located.

The dam portion may include a protruding wall body upwardly protruding from an upper surface of the cell holder and substantially entirely surrounding the upper surface of the cell holder.

At least one of the first bus bar or the second bus bar may be coupled to the cell holder by insert injection molding.

The cell holder may further include a space portion at an upper surface of the cell holder to reduce a contraction stress during the insert injection molding.

The first bus bar and the second bus bar may extend in parallel with each other and may be electrically connected to each other through a connection piece protruding from at least one of the first bus bar or the second bus bar.

The cell holder may further include a jig hole at a location at which the cell holder overlaps at least one of the first bus bar or the second bus bar to fix a location of the at least one of the first bus bar or the second bus bar.

The cell holder may further include a terminal hole for exposing a terminal of a battery cell, and the jig hole may be around the terminal hole.

### BRIEF DESCRIPTION OF THE DRAWINGS

The accompanying drawings in the present specification show embodiments and are illustrated to help further understand the technical concept of the present disclosure along with the detailed description of the present disclosure below. Therefore, the present disclosure shall not be interpreted as being defined only by the aspects illustrated in the drawings.

The above and other aspects, features, and advantages of certain embodiments of the present disclosure will be more apparent from the following description taken in conjunction with the accompanying drawings, in which:
FIG. 1 is a plan view of a battery pack according to one embodiment of the present disclosure;
FIG. 2 is a cross-sectional view of the battery pack taken along line II-II of FIG. 1;
FIG. 3 is a view showing a three-dimensional structure of region "A" of FIG. 1;
FIG. 4 is a cross-sectional view of the battery pack taken along line IV-IV of FIG. 3;
FIG. 5 is a view showing a three-dimensional structure of region "B" of FIG. 1;
FIG. 6 is a cross-sectional view of the battery pack taken along line VI-VI of FIG. 5;
FIG. 7 is a view showing a three-dimensional structure of region "C" of FIG. 1;
FIG. 8 is a view showing a three-dimensional structure of region "D" of FIG. 1;
FIG. 9 is a view showing a three-dimensional structure of region "E" of FIG. 1; and
FIG. 10 is a view showing an arrangement structure of a jig hole of FIG. 1.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. Expressions such as "at least one of," if preceding a list of elements, modify the entire list of elements and do not modify the individual elements of the list.

Hereinafter, embodiments will be described in detail with reference to the accompanying drawings. Before the description, a term or a word used in this specification and the claims shall not be interpreted to be limited by a common or a lexical meaning. Based on the principle that the inventor may appropriately define the concept of the term in a way best to describe the invention, the term or the word shall be interpreted as a meaning and a concept that is in compliance with the technical concept of the present disclosure. Thus, embodiments described in the specification and an element illustrated in the drawing are just part of embodiments and may not represent the entire technical concept of the present disclosure. Accordingly, it should be understood that there may be various equivalents and modified examples which may substitute the embodiments and the element, at the point of the present application. Also, if used in this specification, "comprise/include" and/or "comprising/including" may specify the presence of described shapes, numbers, steps, operations, members, elements, and/or groups thereof and may not exclude the presence or addition of one or more other shapes, numbers, steps, operations, members, elements, and/or groups thereof. Also, for describing embodiments, configurations described as "may" or "may be" may indicate "one or more embodiments."

Also, for helping understand the present disclosure, the accompanying drawings may be illustrated not as actual scales. Rather, sizes of some elements may be exaggerated. Also, the same reference numerals may be assigned to the same elements in different embodiments.

Throughout the specification, unless particularly described otherwise, each element may be provided in a singular number or a multiple number.

That an arbitrary element is arranged "above (or under)" an element or "on (or below)" an element may denote not only that the arbitrary element may be arranged to be in contact with an upper surface (or a lower surface) of the element, but also that another element may be arranged between the element and the arbitrary element arranged on (or below) the element.

Also, if it is described that a certain element is "connected to," "coupled to," or "in contact with" another element, the elements may be directly connected to or in contact with each other, but it may also be interpreted that another element may be "arranged" between the elements or the elements may be "connected to," coupled to," or "in contact with" each other through another element. Also, if a part is referred to as being "electrically connected" to other parts, the part may be directly connected to the other parts or may be connected to the other parts with other devices therebetween.

Throughout the specification, "A and/or B" may denote A or B or A and B, unless particularly otherwise described. That is, "and/or" may include all combinations or arbitrary combinations of a plurality of listed items. "C to D" may denote C or greater to D or less, unless particularly otherwise described.

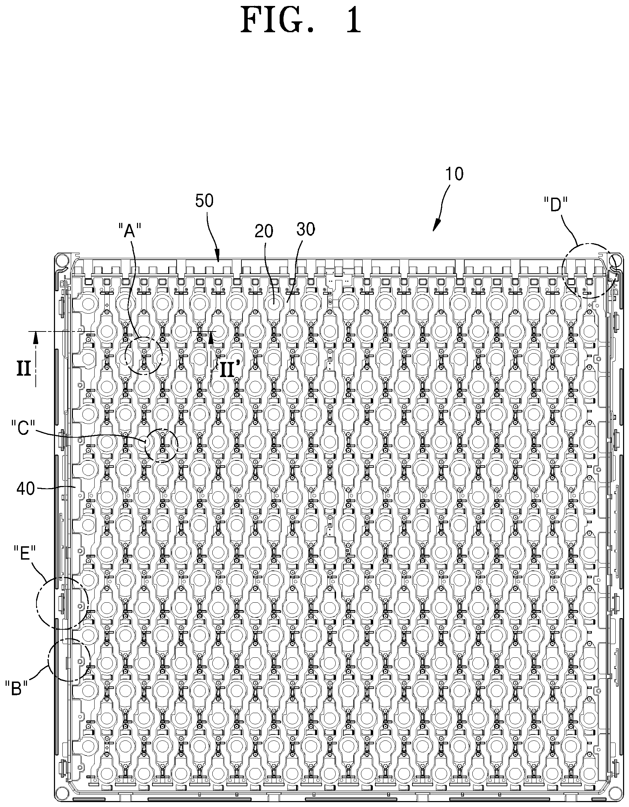

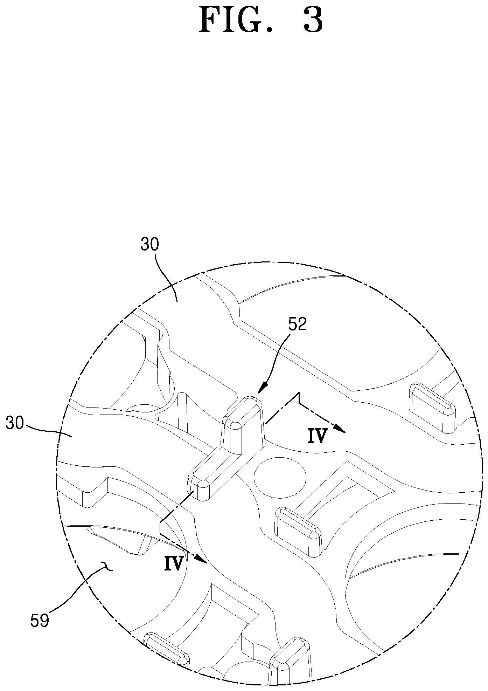

Referring to FIGS. 1 to 10, a battery pack 10 according to one or more embodiments of the present disclosure includes a plurality of battery cells 20, a plurality of first bus bars 30, a pair of second bus bars 40, and a cell holder 50.

The battery pack 10 includes a plurality of battery cells 20. The battery cell 20 may be, for example, a cylindrical battery cell. The battery cells 20 may be accommodated as an array in a pack housing in which an accommodation space is formed. According to the embodiment illustrated in FIG. 1, the battery cells 20 are arranged in staggered rows extending between opposite sides of the battery pack 10. The battery cells 20 include electrodes including a positive electrode and a negative electrode at ends (e.g., opposite ends) in a lengthwise direction of the battery cells 20.

Each of the first bus bars 30 is arranged in the lengthwise direction of the plurality of battery cells 20. Each of the first bus bars 30 is arranged at the plurality of battery cells 20 to face the electrodes of the plurality of battery cells 20. The first bus bar 30 may include, for example, aluminum or copper having high electrical conductivity. The first bus bars 30 may be arranged at upper surfaces of the battery cells 20. According to the illustrated embodiment, the first bus bars 30 are coupled to rows of battery cells 20, which are assembled in a central portion of the battery pack 10. The second bus bars 40 are located on the two opposing sides of the battery pack 10 that run parallel to the rows of battery cells 20. In other words, the outermost rows of battery cells 20, are coupled to the two second bus bars 40.

The second bus bars 40 are arranged in the lengthwise direction of the plurality of battery cells 20. The second bus bars 40 may include the same material as the first bus bars 30. A portion of the second bus bars 40 may be arranged at side surfaces of the battery cells 20.

The cell holder 50 provides an assembling location of the plurality of battery cells 20. A rib is formed in the cell holder 50. The cell holder 50 may include a plurality of ribs. The cell holder 50 includes a first location regulating portion 52, a second location regulating portion 54, and a dam portion 56.

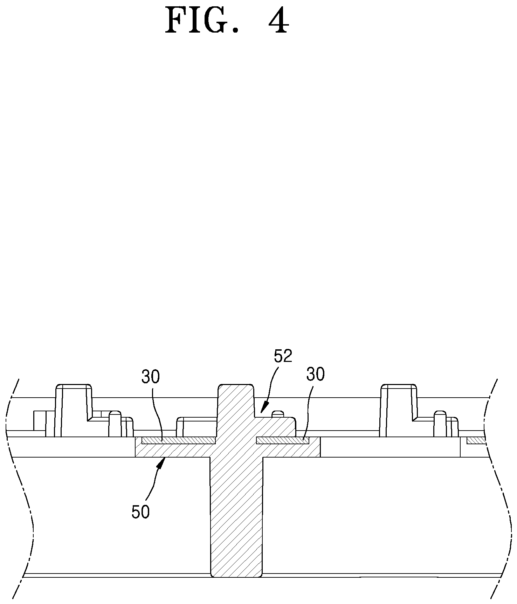

As illustrated in FIG. 4, the first location regulating portion 52 regulates (or fixes) a location of the first bus bar 30. The first location regulating portion 52 may allow the first bus bar 30 to be firmly fixed to the cell holder 50. The first location regulating portion 52 may be formed to have a shape supporting an upper surface of the first bus bar 30. In one or more embodiments, the cell holder 50 and the first bus bar 30 may be coupled to each other by insert injection molding. Insert injection molding is a process of molding or forming plastic parts around other, non-plastic parts or inserts. The first location regulating portion 52 may be formed to cover a portion of the first bus bar 30. The first location regulating portion 52 may be formed at an upper surface of the cell holder 50.

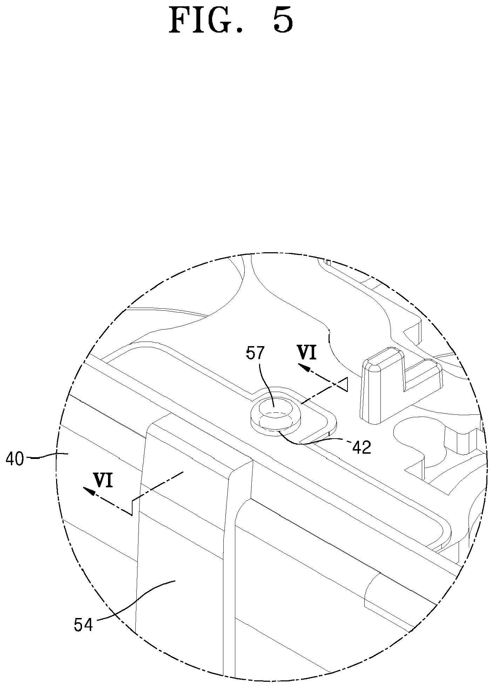

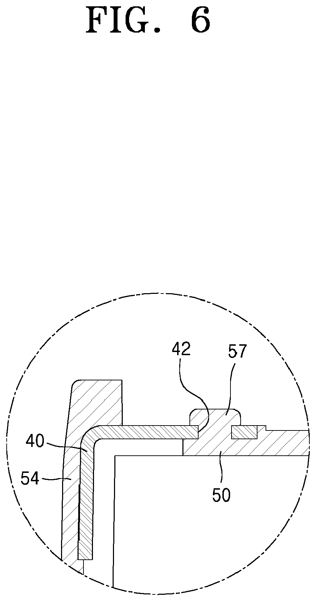

As illustrated in FIG. 5 and FIG. 6, the second location regulating portion 54 regulates (or fixes) a location of the second bus bar 40. The second location regulating portion 54 may be formed to cover a portion of the second bus bar 40. The second location regulating portion 54 may be formed at a side surface of the cell holder 50. In one or more embodiments, the cell holder 50 and the second bus bar 40 may be coupled to each other by insert injection molding.

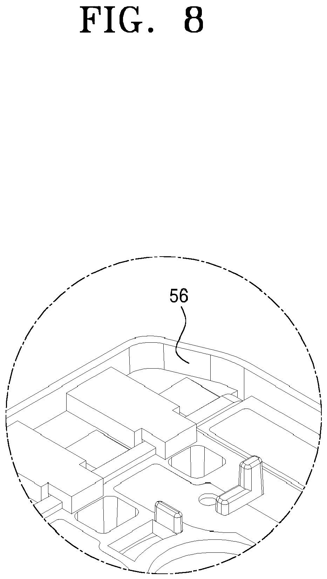

As illustrated in FIG. 8, the dam portion 56 provides an accommodation space of a potting resin to bury at least a portion of the first bus bar 30 in the cell holder 50. The dam portion 56 may include a protruding wall body protruding upwardly from the upper surface of the cell holder 50 and entirely surround the upper surface of the cell holder 50 (e.g., the protruding wall body extends around the periphery of the cell holder 50).

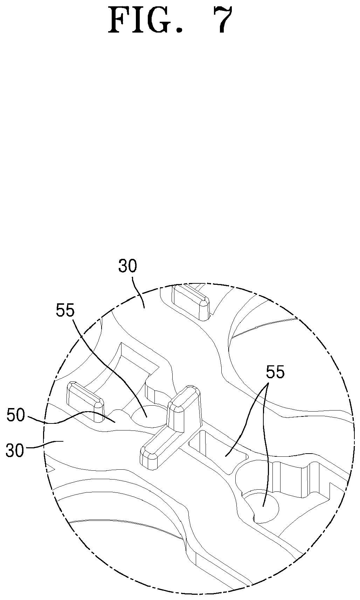

As illustrated in FIG. 7, the cell holder 50 may include a space portion 55.

The space portion 55 may be formed in the upper surface of the cell holder 50. The space portion 55 may be provided to reduce a contraction stress during the insert injection molding of the cell holder 50. By forming the space portion 55, uniformity of the thickness of the cell holder 50 may further be increased.

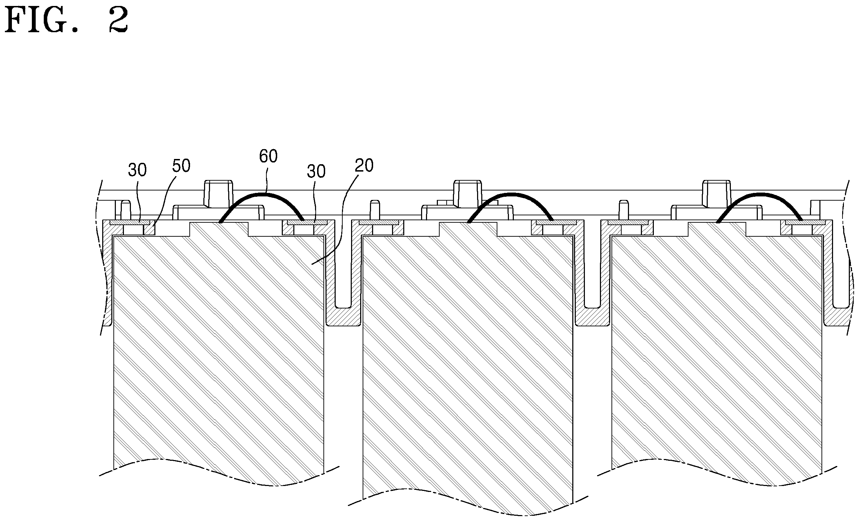

The first bus bars 30 and the second bus bars 40 may extend in parallel with each other. The first bus bars 30 and the second bus bars 40 are electrically connected to the battery cells 20 and may be electrically connected to each other, through a connection piece 60, as shown in FIG. 2. The connection piece 60 may be formed to protrude from any one of the first bus bar 30 and the second bus bar 40. The connection piece 60 may be formed by wire bonding.

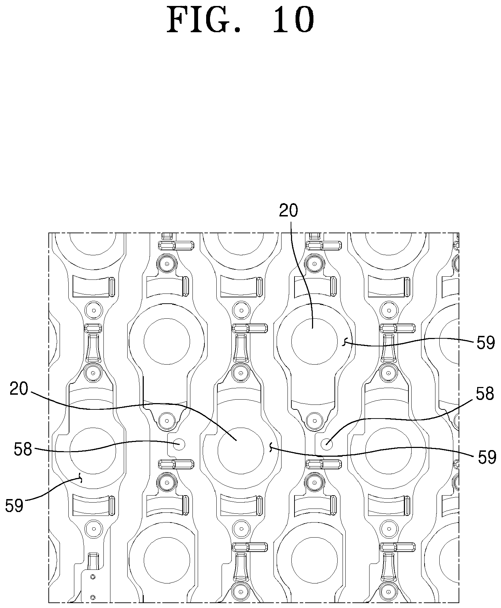

As shown in FIG. 10, the cell holder 50 may further include a jig hole 58.

The jig hole 58 may be provided to fix a location of the cell holder 50 and the first bus bar 30 or a location of the cell holder 50 and the second bus bar 40. In one or more embodiments, the jig hole 58 may be formed at a location at which the cell holder 50 and the first bus bar 30 overlap each other. In one or more embodiments, the jig hole 58 may be formed at a location at which the cell holder 50 and the second bus bar 40 overlap each other.

As shown in FIG. 10, the cell holder 50 may include a terminal hole 59.

The terminal hole 59 may be provided to expose a terminal (electrode) of the battery cell 20 to the outside of the cell holder 50. The jig hole 58 may be formed around or proximate to the terminal hole 59.

As shown in FIG. 5 and FIG. 6, the second bus bar 40 may include a detachment prevention hole 42 coupled to a detachment prevention stopper 57 provided in the cell holder 50.

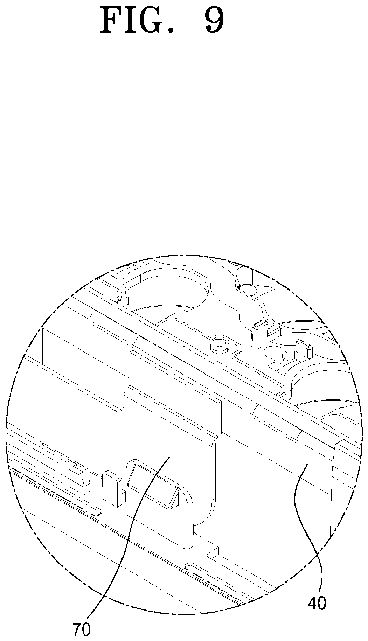

The first bus bar 30 and the second bus bar 40 may be electrically connected to, for example, a battery management system (BMS). As illustrated in FIG. 9, the second bus bar 40 may be coupled to a high-current bus bar 70 through laser welding.

Hereinafter, an operation effect of the battery 10 including the elements as described above will be described in detail, for example, based on a bonding operation between the bus bar and the battery cell in an assembling process of the battery pack.

In the battery pack 10 according to one or more embodiments of the present disclosure, at least one of the first bus bars 30 and the second bus bars 40 may be coupled to the cell holder 50 by insert injection molding. Also, in the battery pack 10, the first bus bar 30 may be firmly fixed to the cell holder 50 by the first location regulating portion 52. The first location regulating portion 52 may be formed to cover a portion of an upper surface of the first bus bar 30. Thus, the first location regulating portion 52 may not allow the first bus bar 30 to move with respect to the cell holder 50 (e.g., the first location regulating portion 52 may prevent the first bus bar 30 from moving up, down, left, or right). Also, the second location regulating portion 54 may be formed to cover a portion of a side surface of the second bus bar 40, and thus, may regulate the second bus bar 40 not to move in the left and right directions with respect to the cell holder 50. Accordingly, the first bus bar 30 and the second bus bar 40 may maintain a configuration to be firmly fixed to the cell holder 50. In this configuration, an ultrasonic wire bonding process may be performed between the first bus bar 30 and the electrodes of the battery cells 20. In this process, the first bus bar 30 may maintain, through the first location regulating portion 52, the configuration to be firmly fixed to the cell holder 50, and thus, may not (or infrequently) move during the ultrasonic wire bonding process. Thus, the quality of wire bonding may be significantly improved compared to a process without the first location regulating portion 52. As a result, the quality and the productivity of the battery back may be improved. The same effect as described above may be achieved in the same manner in an electrical connection process of the second bus bar 40, in which the second location regulating portion 54 is utilized.

In a battery pack according to the present disclosure as described above, a first bus bar coupled to a cell holder may not (or infrequently) move due to a first location regulating portion, and a second bus bar may not (or infrequently) move due to a second location regulating portion, and thus, a bonding defect problem due to a movement of the bus bar during an ultrasonic wire bonding process may be resolved.

Also, according to embodiments, if the first bus bar or the second bus bar is coupled to the cell holder by insert injection molding, compared to a structure in which the first bus bar or the second bus bar is coupled to the cell holder by a double-sided tape or an adhesive, according to the related art, a manufacturing cost may be reduced and the productivity may be increased.

## Claims

1. A cell holder (50) for a battery pack (1) comprising:
a rib providing an assembling location for a plurality of battery cells (20);
a first location regulating portion (52) covering a portion of at least one first bus bar (30) and fixing a location of the at least first bus bar (30); and
a second location regulating portion (54) covering a portion of a second bus bar (40) being assembled at a side portion of the cell holder (50) and fixing a location of the second bus bar (40).

2. The cell holder (50) as claimed in claim 1, wherein the cell holder (50) further comprises an upper surface at which the first bus bar (30) and the first location regulating portion (52) are located and a side surface at which the second bus bar (40) and the second location regulating portion (54) are located.

3. The cell holder (50) as claimed in any one of the preceding claims, wherein the cell holder (50) further includes a dam portion (56) providing an accommodation space for a potting resin in the cell holder (50).

4. The cell holder (50) as claimed in claim 3, wherein the dam portion (56) comprises a protruding wall body upwardly protruding from an upper surface of the cell holder (50) and substantially entirely surrounding the upper surface of the cell holder (50).

5. The cell holder (50) as claimed in any one of the preceding claims,
wherein at least one of the first bus bar (30) and/or the second bus bar (40) is coupled to the cell holder (50) by insert injection molding.

6. The cell holder (50) as claimed in any one of the preceding claims,
wherein the cell holder (50) further comprises a space portion (55) in an upper surface of the cell holder (50), the space portion (55) being configured to reduce a contraction stress during the insert injection molding.

7. The cell holder (50) as claimed in any one of the preceding claims,
wherein the first bus bar (30) and the second bus bar (40) extend in parallel with each other and are electrically connected to each other through a connection piece (60).

8. The cell holder (50) as claimed in any one of the preceding claims,
wherein the cell holder (50) further includes a jig hole (58) at a location at which the cell holder (50) overlaps at least one of the first bus bar (30) or the second bus bar (40), the jig hole (58) being configured to fix a location of the at least one of the first bus bar (30) or the second bus bar (40).

9. The cell holder (50) as claimed in any one of the preceding claims,
wherein the cell holder (50) further comprises a terminal hole (59) exposing a terminal of a battery cell (20) of the plurality of battery cells (20), and
wherein the jig hole (58) is around the terminal hole (59).

10. A battery pack (10) comprising:
a cell holder (50) as defined in one or more of the preceding claims; and
a plurality of battery cells (20) being assembled and fixed in the cell holder (50), wherein each battery cell (2) is electrically coupled to the at least one first bus bar (30) or second bus bar (40).
